# EUROPÄISCHE PATENTSCHRIFT

(11) **EP 1 838 187 B1**
(45) Veröffentlichungstag und Bekanntmachung des Hinweises auf die Patenterteilung: **29.09.2010**
(21) Anmeldenummer: 05801874.8
(22) Anmeldetag: 14.11.2005
(51) Int. Cl.: A47J 37/07

(54) **VERFAHREN ZUM GERICHTETEN ERZEUGEN VON WÄRME UND VORRICHTUNG DAFÜR**
METHOD FOR THE CONTROLLED GENERATION OF HEAT AND CORRESPONDING DEVICE
PROCEDE ET DISPOSITIF POUR PRODUIRE DE LA CHALEUR DE MANIERE DIRIGEE

(30) Priorität: 17.11.2004 DE 202004017817 U
(43) Veröffentlichungstag der Anmeldung: 03.10.2007
(73) Patentinhaber: Wedermann, André, 04821 Brandis (DE)
(72) Erfinder: WEDERMANN, Lothar, 04317 Leipzig (DE)
(74) Vertreter: Rohnke, Christian
(86) Internationale Anmeldenummer: PCT/EP2005/012162
(87) Internationale Veröffentlichungsnummer: WO 2006/053693

(56) Entgegenhaltungen:
- EP-A- 0 380 086
- DE-A1- 2 926 540
- DE-A1- 4 423 862
- DE-A1- 10 108 328
- US-A- 3 385 282
- US-A- 4 953 533

## Beschreibung

Die vorliegende Erfindung betrifft ein Verfahren zum gerichteten Erzeugen von Wärme sowie eine Vorrichtung zur Durchführung des Verfahrens, insbesondere eine Wärmequelle mit einer Holzkohleschale.

Feuer und Glut dienen dem Menschen seit langem als Wärmequelle, insbesondere auch zum Kochen. Vielfältig hat die Technik zu diesen Zwecken Vorrichtungen und Verfahren weitergebildet. Nur zum Beispiel erwärmen Zentralheizungen oder Kaminöfen unsere Häuser, und wir kochen auf Gas- oder Elektroherden. Überdies können wir Menschen uns auch weiterhin der Faszination von Glut und Feuer nicht entziehen. Die Wärme eines Holzfeuers finden wir behaglich, und an schönen Tagen ist das Grillen eine ausgesprochen beliebte Freizeitbeschäftigung.

Der vorliegenden Erfindung liegt die Aufgabe zugrunde, ein Verfahren zum gerichteten Erzeugen von Wärme sowie eine Vorrichtung zur Durchführung des Verfahrens zu schaffen, die einfach und in ihrem Wirkungsgrad verbessert sind.

Die Offenlegungsschrift DE 2926540 A1 beschreibt eine Barbecue-Vorrichtung, die in Form eines Paketes aufweist einen Feuerbehälter, der aus einem nichtbrennbaren Material besteht und Brennstoffkörper aufzunehmen vermag, einen Rost als Träger für die zu behandelnden Nahrungsmittel, eine Halterung zum Halten des Rostes oberhalb des Feuerbehälters und anzündbare Brennstoffkörper. Aus der EP 0 380 086 A1 ist ein mit der DE 2926540 A1 vergleichbarer Einweggrill bekannt, der eine Schale mit einem Kohlerost für Holzkohlebriketts und Zündwürfel aufweist und über ein weitmaschiges Grillrost zum Auflegen des Grillgutes verfügt. Des Weiteren ist aus der Anmeldeschrift WO 2004/004527 ein holzbefeuertes Barbecuegerät bekannt. Dieses holzbefeuerte Barbecuegerät verfügt zur Ablenkung der Flammen des Holzfeuers über eine zusätzliche Abschirmung. Diese Abschirmung ist dabei vorzugsweise so dimensioniert, dass im Wesentlichen der gesamte Flächeninhalt des Grills abgedeckt wird. Auch soll durch die Abschirmung eine gleichmäßig erhitzte Garoberfläche zu erzeugt werden.

Nachteilig bei dieser unmittelbaren Nutzung von brennendem oder glühendem Holz als Wärmequelle ist der ausgesprochen niedrige Wirkungsgrad. Zum Beispiel die schon erwähnen Kaminöfen haben sich unter Anderem diesem Problem gewidmet und können mit ganz erheblich gesteigertem Wirkungsgrad heizen. Allerdings sind solche Wirkungsgrad-verbesserte Vorrichtungen in aller Regel technisch komplex mit allen damit verbundenen Nachteilen, also zum Beispiel recht teuer und aufwendig in der Herstellung.

Drastisch und tragisch erkennbar wird das genannte Problem des geringen Wirkungsgrades beim Verbrennen von Holz insbesondere auch in Krisengebieten der dritten Welt, wo mangelversorgte Menschen in ihrer Not vor Kälte und mangels anderer Möglichkeiten zu kochen ganze Landstriche abholzen - insbesondere in Gegenden, wo Holz ohnehin aufgrund von Dürre rar ist.

Diese Aufgabe wird von einem Verfahren mit dem Merkmal des Anspruchs 1 und einer Wärmequelle mit den Merkmalen von Anspruch 9 gelöst. Bevorzugte Ausgestaltungen sind in den Unteransprüchen angegebenen.

Diese Anmeldung nimmt die Priorität der deutschen Gebrauchsmusterschrift DE 20 2004 017 817 U1 in Anspruch, deren gesamter Offenbarungsinhalt Bestandteil auch dieser Anmeldung ist.

Erfindungsgemäß sind ein Verfahren und eine Vorrichtung zum gerichteten Erzeugen von Wärme dadurch gekennzeichnet, dass Holzkohle oder ein anderer kohleartiger Brennstoff, der sich zum Beispiel durch Pyrolyse oder Kalzinieren herstellen lässt (im Folgenden bespielhaft immer nur mit "Holzkohle" bezeichnet) in einer im wesentlichen abgeschlossenen Glutkammer glühend gehalten wird. Durch die im wesentlichen abgeschlossene Glutkammer kann die glühende Holzkohle so sicher umschlossen sein, dass die Glutkammer sogar umkippen kann, ohne dass heraus fallende Glut die Umgebung gefährdet. Außerdem bewirkt die im wesentlichen abgeschlossene Glutkammer aber auch, dass die Wärmeabstrahlung der Glut überwiegend durch eine feinmaschig siebartige Wandung der Glutkammer gerichtet wird, wobei die feinmaschig siebartige Wandung der Glutkammer unterhalb eines Grillrosts einer Grillvorrichtung angeordnet ist. Denn selbst wenn die Glutkammer zum Beispiel aus Blech (zum Beispiel Edelstahl oder Weißblech) hergestellt ist und sich daher selbst erwärmt und Wärme transportiert, wird das feinmaschige Sieb Wärme in größerer Menge durch lassen. Dadurch dass der Stückdurchmesser der Holzkohle in der Glutkammer vorzugsweise im wesentlichen unter 25 mm liegt, ist die Holzkohle recht einfach und schnell (mit geringer Energie) zu entfachen. Auch kann für diese Stückgröße der Holzkohle eine sehr handliche Glutkammer, ausgebildet werden. Die Glutkammer ist vorzugsweise mit einer Holzkohleportion von ungefähr 150 Gramm gefüllt. Dies reicht - bedingt durch die steuerbare Luftströmung für eine Glutdauer von ungefähr 30 bis 60 Minuten.

Andere Größen der Glutkammer sind erfindungsgemäß denkbar. Das Volumen und die Ausgestaltung der Glutkammer kann demzufolge variabel auf veränderte Anforderungen und/oder Aufgabenstellungen und der gewünschten Brenndauer entsprechend ausbildet oder angepasst werden. Die Brennkammer im System kann also auch größer oder kleiner sein.

Besonders bevorzugt ist für das erfindungsgemäße Verfahren Holzkohle, die folgende Bestandteile aufweist: 40 % bis 60 % der Kohle mit einem Stückdurchmesser von 5 mm bis 20 mm, 40 % bis 60 % der Kohle mit einem Stückdurchmesser von 20 mm bis 25 mm, sowie allenfalls ein kleiner Rest von kleineren Bruchstücken und Staub, die zum Beispiel beim Transport entstehen. Darin erleichtert die Hälfte der Kohle mit den kleineren Stücken das Entzünden, während die andere Hälfte der Kohle mit den größeren Stücken die Dauer der Glut fördert.

Vorzugsweise lässt sich die Glut in der Glutkammer durch - insbesondere mittels einer Leitung gerichtetes - Zuführen einer Luftströmung in die Glutkammer verstärken. Wenn also erfindungsgemäß zum Beispiel mittels eines Föns oder eines Elektrogebläses - oder auch mittels eines Handkurbel-betriebenen Gebläses, um etwa in Krisengebieten wirklich völlig unabhängig von elektrischer Energie zu sein - die Glut angeblasen wird, wird die Glut heißer, und die abgestrahlte Energie nimmt zu. Sobald die Luftströmung wieder beendet wird, "schläft die Glut ein", sie erkaltet, ohne allerdings völlig zu erlöschen, und lässt sich daher durch erneute Luftzuführung auch wieder zu größerer Hitze entfachen. Besonders bevorzugt ist es, die Stärke der Luftströmung einzustellen - sei es zum Beispiel durch das Einstellen einer höheren Gebläsestufe oder durch schnelleres Kurbeln, und aber auch elektrisch ist eine stufenlose Einstellbarkeit der Gebläseleistung, oder allgemeiner gesprochen der Geschwindigkeit der Luftströmung, vorstellbar.

Besonders bevorzugt ist es ferner, die Glut in der Glutkammer durch ein Zündmittel zu entfachen, das in der Nähe der Holzkohle gezündet oder entzündet wird und dessen Hitze insgesamt mittels einer Luftströmung - insbesondere der Luftströmung, mit der sich auch die Glut verstärken lässt - zur Holzkohle in die Glutkammer geleitet wird. Das Zündmittel kann pyrotechnisch sein zum Beispiel nach Art von Streichholzköpfen, allerdings in größerer Menge dieses Materials. Erfindungsgemäße Zündungsmittel können entweder speziell hergestellt sein, oder es können auch fertige Produkte wie zum Beispiel eine Wunderkerze verwendet werden. Aber auch andere bekannte leicht entflammbare - feste, pyrotechnische oder flüssige - Substanzen und Gemische sind als Zündmittel denkbar. So hat sich zum Beispiel - auch geraspeltes - Parafin als geeignet angezeigt. Insbesondere ist erfindungsgemäß vorteilhaft, dass aufgrund des geringen Energiebedarfs zum Entfachen der Holzkohle eine kleine Menge Zündmittel genügt. Das Zündmittel wird vorzugsweise in einer Zündkammer benachbart zur Glutkammer vorzugsweise nahe bei der Holzkohle gezündet, und die Hitze des Zündmittels wird der Holzkohle zugeleitet.

Insbesondere zur Durchführung dieses erfindungsgemäßen Verfahrens weist eine erfindungsgemäße Wärmequelle eine im wesentlichen abgeschlossene Glutkammer auf, die mindestens eine feinmaschige siebartige Wandung zum Abstrahlen der Wärme aufweist. Die Wärmequelle umfasst vorzugsweise eine Holzkohleschale mit einer im wesentlichen oberseitigen Abdeckung mit feinmaschigem Sieb sowie mindestens eine Belüftungsöffnung in einem unteren Bereich der Holzkohleschale. In die Belüftungsöffnung mündet von außen eine Luftversorgungsleitung, an die ein Luftstromerzeuger anschließbar ist. Als solcher ist zum Beispiel ein Fön von außen auf die Luftversorgungsleitung aufsteckbar. Ein Gebläse kann aber auch direkt in die Vorrichtung integriert oder eingebaut sein und so die Luftversorgungsleitung mit einer Luftströmung versorgen.

Die Wärmequelle weist vorzugsweise eine Zündkammer für ein Zündmittel auf, wie es beispielhaft oben beschrieben ist. Die Zündkammer ist nahe bei der Holzkohleschale angeordnet und mündet durch mindestens eine Zündöffnung in einen unteren Bereich der Holzkohleschale. Bevorzugt sind allerdings mehrere düsenartige Zündöffnungen, durch die die von dem entflammen Zündmittel erhitzte Luft mit erhöhter Geschwindigkeit und Druck in die Holzkohle geleitet wird, um diese zu entfachen. Auch die mindestens eine Belüftungsöffnung ist vorzugsweise düsenartig.

Besonders bevorzugt verläuft die Luftversorgungsleitung durch die Zündkammer hindurch. Dann können nämlich die Belüftungsöffnungen, die aus der Luftversorgungsleitung in die Holzkohleschale hinein führen, auch als Zündöffnungen dienen. Außerdem kann die von außen durch die Luftversorgungsleitung geleitete Luftströmung zum Einen beim Entfachen der Glut dazu dienen, die Hitze des Zündmittels zur Holzkohle zu leiten, sowie zum Anderen später dazu, die Hitze der Glut zu verstärken, wenn die Holzkohle einmal entfacht ist.

In der Zündkammer ist vorzugsweise eine Pfanne für das Zündmittel angeordnet. Wenn die Luftversorgungsleitung durch die Zündkammer hindurch verläuft, wird diese Pfanne von der Luftströmung aus der Luftversorgungsleitung vorzugsweise nicht direkt durchströmt, sondern durchwirbelt - nämlich zum Beispiel dadurch, dass die Luftströmung rings um die Pfanne von unten am Pfannenrand nach oben vorbei streicht und dabei über den Pfannenrand in die Pfanne hinein wirbelt. Diese Pfanne eignet sich insbesondere für kleine Mengen Parafin in kleinen Stücken, zum Beispiel geraspelt.

Vorzugsweise ist die Luftleitung unter der Wärmequelle zu einer flachen Kammer vergrößert. Die dort hindurch geleitete Luftströmung kühlt diesen Bereich und sorgt so vorteilhaft dafür, dass die Wärmequelle sogar auf wärmeempfindlichen Untergründen abgestellt werden kann, weil sie sich unterseitig kaum oder sogar überhaupt nicht erwärmt.

Besonders bevorzugt ist die erfindungsgemäße Wärmequelle für Grillvorrichtungen zu verwenden, mit denen sich Nahrungsmittel, wie zum Beispiel Fleisch oder Fisch garen lassen. So kann erfindungsgemäß eine Grillvorrichtung die erfindungsgemäße Wärmequelle aufweisen, wobei die Grillvorrichtung einen im wesentlichen horizontalen Grillrost aufweist, unter dem sich die Glutkammer mit im wesentlichen oberseitiger Abdeckung aus feinmaschigem Sieb befindet. Vorzugsweise gibt es zwischen der Abdeckung der Holzkohleschale mit feinmaschigem Sieb und dem Grillrost einen Abstand von mindestens wenigen Zentimetern. Weiter vorzugsweise ist die Wärmequelle in einer Isolieraußenschale enthalten, die die Wärmequelle um einen Luftraum beabstandet umschließt. Dadurch wird die Grillvorrichtung außenseitig nicht heiß. Auch bei versehentlichem Berühren besteht daher dort keine Verbrennungsgefahr. Der Grillrost liegt dann oberhalb der Wärmequelle vorzugsweise auf der Isolieraußenschale - bildet sozusagen ihren Deckel. Der Grillrost kann an der Isolieraußenschale dann besonders bevorzugt (lösbar) befestigt sein, so dass sogar ein Umkippen kaum noch eine Verbrennungsgefahr bedeutet, weil die Grillvorrichtung als eine Baueinheit zusammenbleibt - und die glühende Holzkohle in der Glutkammer erfindungsgemäß ohnehin sicher umschlossen am Herausfallen gehindert ist. Insgesamt ergibt sich erfindungsgemäß also eine Wärmequelle oder eine Grillvorrichtung, die sauber, sicher und schnell bedienbar ist.

Weitere Vorteile, Ausgestaltungen und Details der Erfindung werden im Folgenden mit Bezug auf die beigefügten Abbildungen beschrieben:
- ***Figur 1***: zeigt eine räumliche Ansicht einer erfindungsgemäßen Grillvorrichtung,
- ***Figur 2***: zeigt eine Explosionsdarstellung der Vorrichtung nach Figur 1,
- ***Figur 3***: geschnittene Seitenansicht durch die Holzkohleschale der Vorrichtung gemäß Figur 1 und 2,
- ***Figur 4***: zeigt eine geschnittene Seitenansicht einer alternativen Grillvorrichtung gemäß der Erfindung und
- ***Figur 5***: zeigt eine geschnittene Seitenansicht einer anderen alternativen Grill- vorrichtung gemäß der Erfindung.

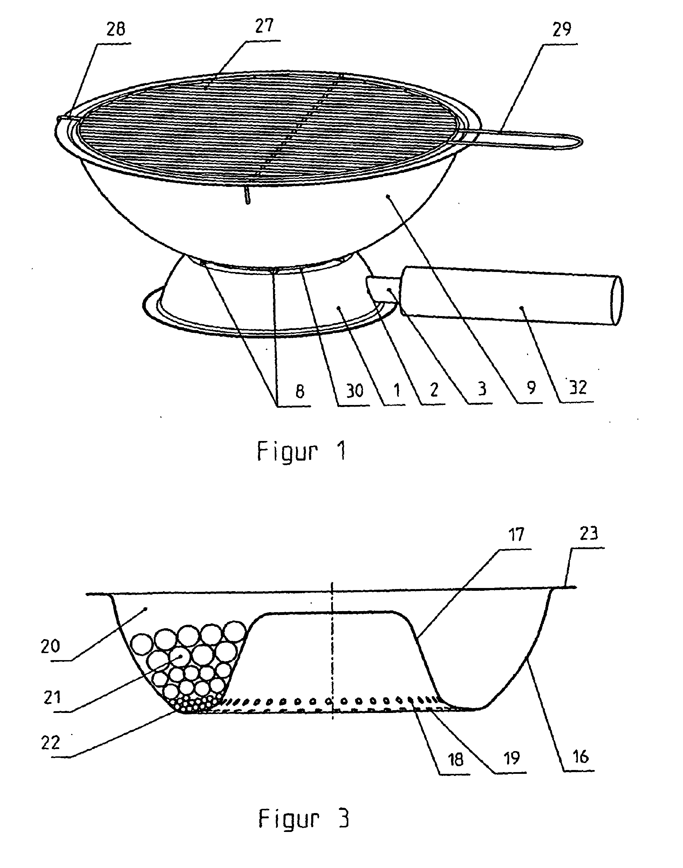

Die Vorrichtung gemäß den Figuren 1 bis 4 ist überwiegend unter Verwendung vorgefertigter, vorzugsweise rotationssymmetrischer Teile aus dünnem Edelstahlblech aufgebaut. Es ist aber erfindungsgemäß auch jede andere Formgestaltung denkbar. Wegen fertigungstechnischer Einfachheit und Kosten sind die dargestellten rotationssymmetrischen Formen jedoch vorteilhaft. Für einige der abgebildeten Bauteile lassen sich erkennbar sogar als Produkt erhältliche Edelstahlschalen verwenden, und es sind dann nur Nachbearbeitungsschritte erforderlich. Die Ausführung in Edelstahl entspricht auch aktuellen Vorgaben hygienischer Bestimmungen und ermöglicht ein 1einfaches Reinigen der dann zu diesem Zweck auch zerlegbaren Vorrichtung.

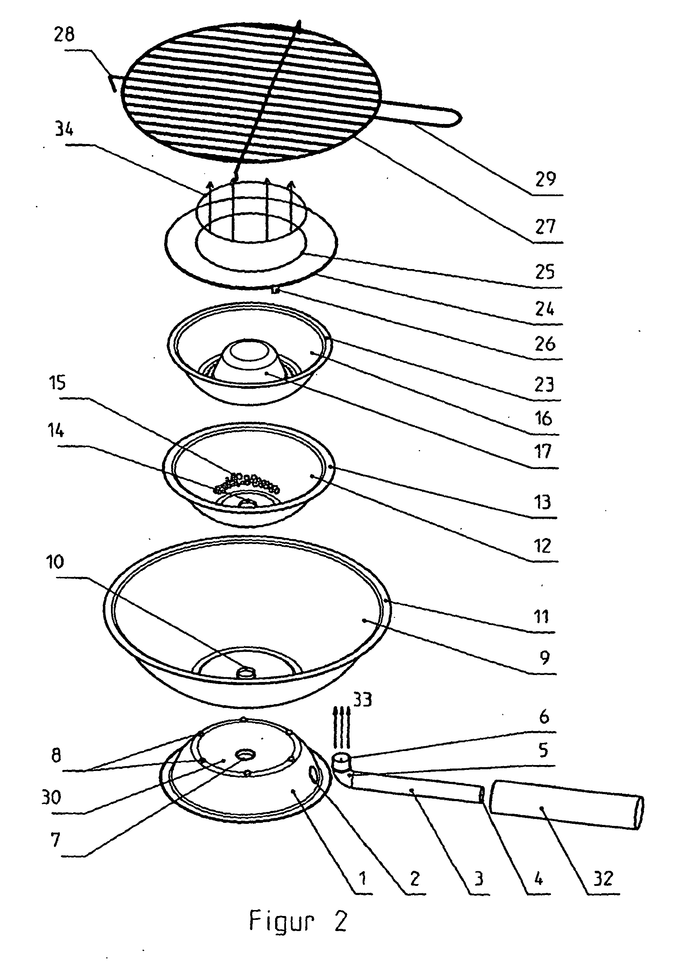

Zunächst soll anhand der ***Figur 2*** beispielhaft der Aufbau der erfindungsgemäßen Vorrichtung beschrieben werden.

In die Wandung eines rotationssymmetrischen Fußes **1** ist ein kreisförmiger Durchbruch **2** eingebracht, welcher der Aufnahme eines Luftzuleitungsrohres **3** dient. Auf dessen freies Ende **4** ist ein Verbrennungsluftstromerzeuger **32** zur Erzeugung eines Verbrennungsluftstroms **33** aufsteckbar. Das vordere Ende des Luftzuleitungsrohres **3** ist als Rohrwinkel **5** ausgeformt und trägt einen Gewindestutzen **6** eines Verschluss-Systems. Dieser ist durch einen zentrischen Durchbruch **7** des Fußes **1** gesteckt und nimmt, über ebenfalls zentrische Durchbrüche **10** beziehungsweise **14** in diesen, eine Trägerschale **9** sowie eine Aufnahmeschale **12** auf, die zentrisch mit einem Verschluss-System versehen ist.

Mit dem Aufsetzen dieser Aufnahmeschale **12** auf den Gewindestutzen **6** und der Betätigung des Verschluss-Systems **6, 14** ist die Vorrichtung zusammengefügt, mechanisch stabil und standsicher. Mit in die Planfläche **30** des Fußes **1** nach oben eingedrückten Noppen **8** ist erfindungsgemäß ein Zwischenraum **31** zu der Trägerschale **9** hergestellt. Damit ist erfindungsgemäß ein möglicher Wärmedurchgang von der Trägerschale **9** auf den Fuß **1** auf das Minimum der übertragenden Wärmebrückenflächen der Noppen **8** beschränkt, und es ist erfindungsgemäß das Wirkprinzip von Tellerfedern der montierten Teile **1, 9** und **12** so ausgenutzt, dass die so durch den Kraftschluss **6, 14** gefügten Teile **1, 9** und **12** eine mechanisch stabile Baueinheit bilden.

Die Aufnahmeschale **12** dient der Aufnahme einer Menge einer Anbrennhilfe **15 -** zum Beispiel geraspeltes Paraffin, flüssige Grill-Anbrennhilfe oder bevorzugt pyrotechnisches Zündmittel entweder in Granulatform oder vorzugsweise um einen Draht oder ein anderes Trägermaterial haftend (wie zum Beispiel bei einer Wunderkerze). Diese Aufnahmeschale **12** nimmt eine Holzkohleaufnahmeschale **16** auf, die einen Verbrennungsraum **20** umschließt, in dem sich eine Holzkohleschüttung **21** befindet. Diese Holzkohleaufnahmeschale **16** weist eine nach innen oben gerichtete zentrische, kegelförmige Aufwölbung **17** auf, in deren unterem inneren Umfang in einem oder mehreren konzentrischen Lochkreisen **18** bzw. **19** düsenartige Durchbrüche eingebracht sind. In dieser kegelförmigen Aufwölbung **17** entsteht ein Stau des vom Zündmittel energieangereicherten Verbrennungsluftstroms, wodurch sich dieser verwirbelt und durch die düsenartigen Durchbrüche **18, 19** im Verbrennungsraum **20** die Holzkohleschüttung **21** entzündet. Auch ist in einer anderen Realisierung der Erfindung diese Form dieser kegelförmigen Aufwölbung **17** so wählbar, dass ein ständiges Nachrutschen noch unverbrannter Holzkohlestücke erfolgt.

In einer weiteren Ausgestaltung der Erfindung ist diese Holzkohleaufnahmeschale **16** aus Streckmetall gefertigt, so dass der Durchsatz des Verbrennungsluftstroms **33** über die gesamte Fläche der Holzkohleaufnahmeschale **16** erfolgt, wobei das "Dach" der kegelförmigen Aufwölbung **17** mit einer Kappe abgedeckt ist.

Über einem Rand **23** der Holzkohleaufnahmeschale **16** ist ein Flammsieb **24** angeordnet, auf dem zentrisch eine feinmaschige Auflage **25** aufgebracht ist und mit federnden Krallen **26** über die Ränder **13** der Aufnahmeschale **12** und **23** der Holzkohleaufnahmeschale **16** federnd festgehalten ist. Damit ist der Verbrennungsraum **20** mechanisch fest und sicher abgeschlossen. Es ist auch bei Ankippen oder gar Umkippen oder Umfallen der Vorrichtung ein Herausfallen der Holzkohleschüttung **21** samt der darin möglicherweise enthaltenen gefährlichen Glut **22** aus dem Verbrennungsraum **20** quasi unmöglich, und im Betriebszustand der Vorrichtung ist ein Durchsatz einer Strahlungswärme durch die Siebe **24, 25** gewährleistet.

Erfindungsgemäß verhindert diese Ausbildung des Flammensiebs auch den gefürchteten Funkenflug sowie das Aufzüngeln von Flammen bei eventuell durchtropfendem Fett.

Auf dem Rand **11** der Trägerschale **9** ist ein Grillrost **27** mit Haltebügeln **28** so festgehalten, dass an einem Haltegriff **29** die gesamte Vorrichtung aus der waagerechten Betriebsstellung in eine senkrechte Stellung - aber auch in jede andere Schrägstellung - gekippt und auch in glühendem Zustand der Holzkohleschüttung **21** in jeder dieser Stellungen gefahrlos transportierbar ist - da ja insbesondere die Glut in der auch durch die Siebe **24, 25** im wesentlichen abgeschlossenen Glutkammer sicher umschlossen gehalten wird. In einem solchen gekippten Zustand (nicht dargestellt) ist die Vorrichtung beispielsweise auch als Heizgerät verwendbar, wobei die Strahlungswärme **34** erfindungsgemäß durch die Trägerschale **9** als Reflektor sogar zusätzlich gerichtet ist. Die Dimensionierung der Aufnahmeschale **12** und der Trägerschale **9** ist erfindungsgemäß so aufeinander abgestimmt, dass zwischen diesen beiden Schalen ein Luftraum realisiert ist. Dadurch ist erreicht, dass nur über eine geringe Berührungsfläche Energie von der Aufnahmeschale **12** auf die Trägerschale 9 übertragen wird, und dass die Reflektoreigenschaften der Trägerschale **9** und der inneren Schale **12** in Richtung des Grillrosts **27** voll ausgenutzt werden. Damit ist eine mögliche Erwärmung auf dem Boden der Trägerschale **9** in der unmittelbaren Umgebung von deren zentrischem Durchbruch **10** begrenzt, und der übrige Teil bis zum Rand **11** hat Umgebungstemperatur, so dass Verbrennungsgefahr für den Bediener und die Umgebung quasi ausgeschlossen ist. Somit erfüllt diese Vorrichtung sogar auch die Voraussetzungen für den Einsatz in geschlossenen Räumen und sogar direkt auf einem Esstisch, sogar auf einer Holztischplatte. Sicherheitsabstand braucht dann nur noch dem menschlichen Wärmeempfinden angepasst zu werden.

Zur Ortsveränderung mit auf dem Grillrost **27** aufgelegtem Gargut ist die Vorrichtung an allen Außenbereichen des Fußes **1,** der Trägerschale **2** und dem Luftzuleitungsrohr **3** für den Benutzer gefahrlos anzufassen, wobei das Luftzuleitungsrohr **3** als Handgriff zum freien Tragen der Vorrichtung dienen kann.

Zum Betrieb der abgebildeten Vorrichtung dient ein Verbrennungsluftstromerzeuger *32.* In einer erfindungsgemäßen Anwendung ist dies ein Heißluftfön, der mittels eines Adapters auf das freie Ende **4** des Luftzuleitungsrohres **3** aufzustecken ist. Mit einem solchen Gerät kann die Holzkohleschüttung **21** sogar ohne die Verwendung einer Anbrennhilfe 15 entzündet werden.

Für den Betrieb der Vorrichtung sind nur kleine Verbrennungsluftmengen in Verbrennungsluftströmen **33** niedriger Strömungsgeschwindigkeit erforderlich. Diese sollten jedoch gut einstellbar sein.

Insbesondere zum Betrieb der erfindungsgemäßen Wärmequelle dort, wo elektrische Energie aus Steckdosen oder Batterien kaum verfügbar sind - insbesondere in Krisengebieten - kann der Verbrennungsluftstromerzeuger **32** sogar mittels Handkurbel (nicht dargestellt) als erfindungsgemäßes Zusatzaggregat zu bedienen sein.

Eine sehr elegante Lösung eines Verbrennungsluftstromerzeugers **32** ist ein mittels eingebauter Batterie betriebenes Gebläse sehr kleiner Bauart. Auch ist dessen Betrieb aus dem Stromnetz über ein Netzkabel denkbar. Sogar ein Fön ist verwendbar. Das Gebläse kann auch direkt zum Beispiel in einen Fuß oder Sockel der Wärmequelle integriert oder eingebaut sein. Dann ist in der Vorrichtung je nach Energieversorgung auch entweder ein Batteriefach oder ein Kabel mit Stecker vorgesehen.

Als besonders einfache Alternativlösung kann ein Mensch auch mittels eines auf das Rohr **3** aufgesteckten Schlauches durch seine Atemluft den Verbrennungsluftstrom **33** erzeugen. Auch der Betrieb mit einer Muskelkraft betriebenen Luftpumpe oder einem Blasebalg, die aus Sicherheitsgründen jeweils mit einem Rückschlagventil versehen sein sollten, um Luft nicht durch das Luftzuleitungsrohr **3** wieder zurückzusaugen, ist denkbar. Durch diese mögliche Unabhängigkeit der Vorrichtung von Sekundärenergiequellen ist also eine weltweit universelle Einsetzbarkeit der Vorrichtung auch in mangelversorgten Gebieten möglich.

Garvorgänge durch Braten beruhen auf der Direkteinwirkung der Strahlungswärme einer offenen Energiequelle auf das Gargut.

Erfindungsgemäß ist dieser physikalische Vorgang in der Weise realisiert, dass in einer ersten Phase, beginnend mit dem Entzünden der Anbrennhilfe **15** und damit der Entwicklung eines energieangereicherten Luftstroms die Holzkohleschüttung **21** zunächst angebrannt wird, bis eine kurzzeitige, natürliche Rauchentwicklung beendet ist. Für das Entflammen der Holzkohleschüttung **21** ist deren Trockenheit nicht unbedingt erforderlich, d.h., dass sich auch durchfeuchtete beziehungsweise durchnässte Holzkohle insbesondere durch den energieangereicherten Luftstrom entzündet. Der Verbrennungsluftstrom **33** ist so gesteuert, dass die Holzkohleschüttung **21** nur in ihrer unteren Lage angebrannt ist und dort ein Glutbett **22** erzeugt. Während einer nun folgenden zweiten Phase genügt ein nur schwacher Verbrennungsluftstrom **33** zum Erhalten dieses Glutbetts **22** und damit zur Erzeugung der für einen begonnen Garvorgang benötigten Strahlungswärme **34.** Durch Steuerung des Verbrennungsluftstroms **33** ist die Strahlungswärme **34** jederzeit an den Energiebedarf des Garvorgangs anpassbar. Während des Verbrennungsvorgangs kann die Holzkohleschüttung **21** infolge der erfindungsgemäßen Ausformung der Holzkohleaufnahmeschale **16** nachrutschen, so dass immer genügend Vorrat dieses Energieträgers über dem Glutbett **22** vorhanden ist.

Im Zusammenwirken der erfindungsgemäßen Anordnung des Flammensiebes **24** mit der Auflage **25** und der Reflektoreigenschaften der Trägerschale **9** ist eine ausgeglichene Verteilung der Strahlungswärme **34** unter dem Grillrost **27** und damit ein gleichmäßiges Garen des auf diesem befindlichen Gargutes gewährleistet.

In einer weiteren erfindungsgemäßen Funktion ist der Verbrennungsluftstrom **33** ausgeschaltet, wenn der Garvorgang vorerst beendet sein soll. Erfindungsgemäß erfüllt in einer solchen Phase das Flammensieb **24** die Funktion, die bei einem Feuer eine A-scheschicht übernehmen kann. Es behindert nämlich die weitere Zufuhr von Verbrennungsluft von oben, deren Eindringen in den Verbrennungsraum **20** darüber hinaus durch die aufsteigende Strahlungswärme **34** verhindert wird. Da auch aus dem Verbrennungsluftstromerzeuger **32** in dieser Phase kein Verbrennungsluftstrom **33** nachgeführt wird, kühlt die Glut etwas ab, sie "schlägt ein".

Dieser Zustand hält sich für eine geraume Zeit. Durch erneute Zufuhr eines Verbrennungsluftstromes **33** lässt sich die Glut aber jederzeit auch wieder zu voller Leistung entfachen. Damit ist die restlose Verbrennung der Holzkohleschüttung **21** möglich. Selbst wenn die Glut mangels Verbrennungsluftzufuhr völlig zum Erlöschen kommt, sind Holzkohlereste bei einer erneuten Inbetriebnahme der Vorrichtung wieder verwertbar.

In diesem Zustand, aber auch im luftströmungsunterstützten Betriebszustand, ist die Vorrichtung zur Ausnutzung der Strahlungswärme **34** nahezu gefahrlos im Sinne einer Heizung zu benutzen und kann, da eine Abgasentwicklung auf ein Minimum eingeschränkt ist, nahezu gefahrlos auch in geschlossenen Räumen benutzt werden.

In einer weiteren nützlichen Anwendung ist ein Kochgefäß, zum Beispiel ein Kochtopf, wahlweise auf das Flammensieb **24** oder auf den Grillrost **27** aufsetzbar. Die Vorrichtung funktioniert dann ebenfalls in der beschriebenen Weise und kann so also auch als Kochstelle dienen.

Es ist erfindungsgemäß möglich, die Vorrichtung in verschiedenen Größen zu dimensionieren, so dass unterschiedliche Ansprüche an die Mengen gleichzeitig zu garender Speisen erfüllbar sind. So kann zum Beispiel eine erfindungsgemäße Grillvorrichtung ausgebildet sein, die gerade groß genug ist, um auch nur für eine Person ein Steak oder ein paar Würstchen zu grillen, aber auch ein Gastronomiegrill gemäß der Erfindung verkörpert die erfindungsgemäßen Vorteile. Insbesondere ein solcher größerer Grill ließe sich auch fertigungstechnisch vorteilhaft nicht nur rotationssymmetrisch, sondern in länglicher (um einen Begriff des Computer Aided Design zu verwenden: extrudierter) zum Beispiel auch spiegelsymmetrischer Form ausbilden.

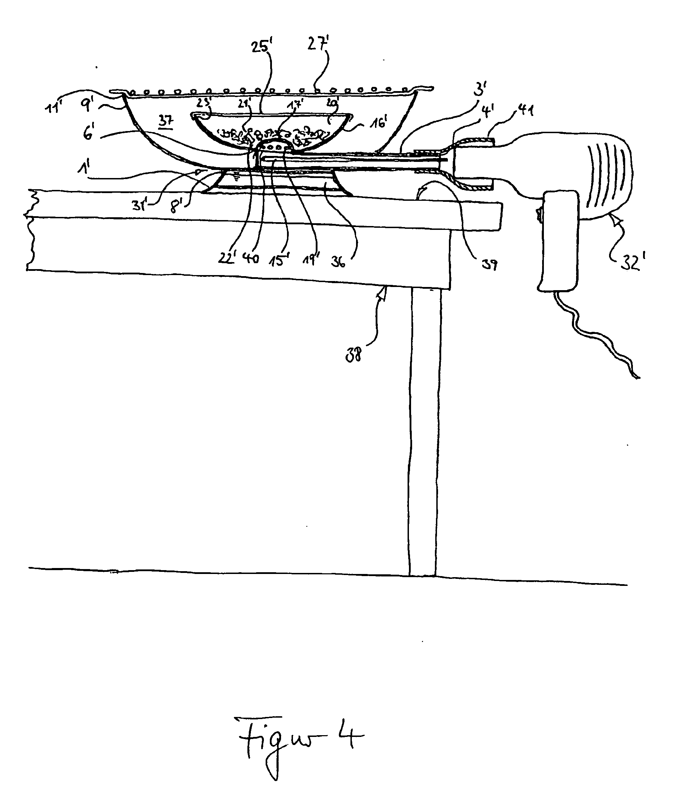

***Figur 4*** zeigt eine alternative Ausgestaltung eines erfindungsgemäßen Grills. In ***Figur 4*** sind zunächst sämtliche funktional ähnlichen Elemente und Details wie in Figur 1 bis 3 nummeriert, ohne zu denen zwangsläufig direkt identisch zu sein. Die besonders bemerkenswerten Unterschiede zu der Vorrichtung gemäß Figur 1 bis 3, aus denen sich auch diese Bauteileunterschiede ergeben, sind folgende:

Gemäß ***Figur 4*** hat der Fuß 1' einen Wasserbehälter **36** integriert in sich, der zusätzlich zu dem Zwischenraum **31'** einen wärmeisolierenden Bereich unter der Holzkohleschale **16'** darstellt. Zusammen mit dem Luftraum **37'** zwischen der Holzkohleschale **16'** und der Isolieraußenschale (Trägerschale) **9**' unterstützt der Wasserbehälter **36** die Möglichkeit, die erfindungsgemäße Grillvorrichtung auch zum Beispiel auf einem Tisch **38** mit hölzerner Tischplatte **39** auch im Betrieb der erfindungsgemäßen Vorrichtung stehen zu lassen, ohne dass die Tischplatte **39** durch den Fuß **1**' angekokelt würde.

Die Holzkohleschale **16'** mit ihrer oberseitigen Abdeckung **25'** aus feinmaschigem Sieb, die über den oberen Rand **23'** der Holzkohleschale **16'** geschnappt ist und dort sicher die Holzkohle **21'** samt Glut **22'** umfasst hält, ist als vorgefertigtes Wechselmodul zusammen mit der Zündkammer 17' und ihren düsenartigen Zünd- und Belüftungsöffnungen **19'** ausgebildet. Zusammen mit einer geeignet abgewogenen und geeignet körnigen Holzkohleportion kann dieses Wechselmodul sogar auch als vorgefertigter Einmalartikel hergestellt sein und entsprechend in den Handel gebracht werden. Dieses Modul **(16', 17', 21', 25')** ist dort, wo die Vorrichtung gemäß Figur 1 bis 3 den Gewindestutzen 6 aufweist, durch einen besonders einfach betätigbaren Schnellverschluss **6'** ausgebildet, der zum Beispiel mittels Magnetkraft und/oder als formschlüssiger Schiebe- oder Drehschnellverschluss (Bajonett) funktionieren kann.

Gemäß ***Figur 4*** ist die Zündkammer nicht als separate Schüssel (13 in ***Figur 1***) ausgebildet, sondern wird oberseitig von der kegelförmigen oder kugelabschnittförmigen Aufwölbung **17'** gebildet, in der sich die Zünd- und Belüftungsöffnungen **19'** radial gleichmäßig auf einem Umfang angeordnet befinden. Unterseitig mündet die Zündkammer **17'** wie dargestellt als eine großflächige Öffnung 40 in das dort angeordnete Ende der Luftversorgungsleitung **3'.** Dieses Ende der Luftversorgungsleitung **3'** gehört gewissermaßen mit zu der Zündkammer **17',** denn die Luftversorgungsleitung **3'** ist als gerades, längliches Rohr so ausgebildet, dass sich eine entzündete Wunderkerze **15'** als Zündmittel in die Luftversorgungsleitung **3'** einführen lässt. Dadurch, dass die Wunderkerze **15'** ungewöhnlicherweise an ihrem unteren (in der Figur rechten) Ende angezündet wurde, bevor sie der Benutzer in die Luftversorgungsleitung **3'** einführte, brennt sie nun (in Figur 4 nach links) wie eine Lunte in Richtung des Endes der Luftversorgungsleitung **3',** über dem sich die kegelförmige Zündkammer-Aufwölbung **17'** befindet.

Wird nun ein Fön **32'** als Luftstromerzeuger auf die tüllenartige Erweiterung **41** am freien Ende **4'** der Luftversorgungsleitung **3'** aufgesetzt und angeschaltet, bläst er eine Luftströmung in die Luftversorgungsleitung **3'** hinein und drückt somit die Hitze des pyrotechnischen Zündmittels Wunderkerze **15'** durch die Öffnungen **19'** in die Holzkohle **21',** so dass sich diese zur Glut **22'** entfacht.

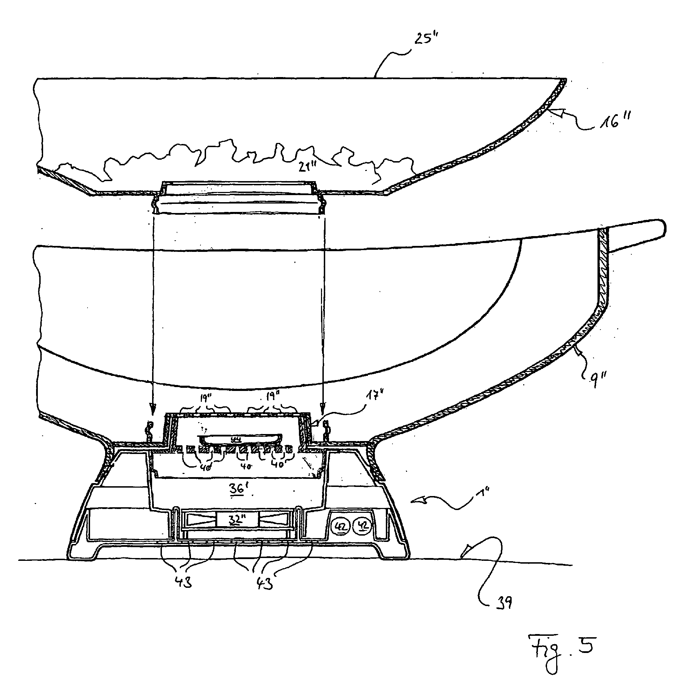

***Figur 5*** zeigt eine andere alternative Ausgestaltung eines erfindungsgemäßen Grills. Auch in ***Figur* 5** sind zunächst sämtliche funktional ähnlichen Elemente und Details wie in Figur 1 bis 3 nummeriert, ohne zu denen zwangsläufig direkt identisch zu sein. Die besonders bemerkenswerten Unterschiede zu den Vorrichtungen gemäß Figur 1 bis 4, aus denen sich auch diese Bauteileunterschiede ergeben, sind folgende:

Gemäß ***Figur 5*** ist die Zündkammer nicht als separate Schüssel (13 in Figur 1) ausgebildet, sondern wird oberseitig von einer zylinderförmigen Aufwölbung **17"** gebildet, in der sich die Zünd- und Lüftungsöffnungen **19"** oberseitig axial orientiert befinden. Unterseitig mündet die Zündkammer **17"** durch mehrere ebenfalls axial verlaufende kleine Öffnungen **40'** in eine große Luftkammer **36',** die von der Luftströmung aus einem Gebläse **32"** durchströmt wird. Die Luftkammer **36'** isoliert wegen der sie durchströmenden kalten Luft die Vorrichtung nach unten, so dass sich die Vorrichtung auch auf wärmeempfindlichem Untergrund **39** abstellen lässt. Das Gebläse **32"** ist in den Sockel oder Standfuß **1"** eingebaut und wird von Batterien **42** mit Strom versorgt.

Das Gebläse **32"** saugt die Luft von außen durch Öffnungen **43** in der Unterseite des Sockels **1 "** in die Luftkammer **36'** hinein und drückt sie von dort durch die Öffnungen **40'** in die Zündkammer **17"** hinein. Dort streicht die Luft nach oben an dem Rand einer Pfanne **44** vorbei und wirbelt so in die Pfanne **44** auch hinein. Geraspeltes Parafin (nicht dargestellt), das in die Pfanne gelegt werden kann, wird dadurch zum Anzünden der Kohle in der darüber aufsteckbaren Holzkohleschale **16"** zu besonders großer Hitze entfacht. Dadurch dass die Luftströmung von unten durch die Zündkammer 17" nach oben strömt, wird die Pfanne **44** nicht direkt durchströmt, sondern wie beschrieben nur durchwirbelt. Die Luftversorgungsleitung **3, 3'** aus ***Figur 1 bis 4*** ist in dieser Vorrichtung gemäß ***Figur 5*** insgesamt also auf die Volumina der Luftkammer **36'** und des Gebläses **32"** beginnend bei den Öffnungen **43** unter dem Gebläse reduziert.

Die Holzkohlekammer **16"** mit der oberseitigen feinmaschig siebartigen Wandung **25"** und vorzugsweise auch den unterseitig angebrachten Lufteinlässen (nicht dargestellt) ist zusammen mit der enthaltenen Kohleschüttung **21"** ein vorgefertigtes Wechselmodul beispielsweise als Einmalartikel, der sich (durch die beiden Pfeile angedeutet) von oben über die Zündkammer **17"** formschlüssig vorzugsweise aufstecken lässt. Auch jegliche andere lösbare Verbindungsarten sind erfindungsgemäß denkbar wie zum Beispiel eine Schraub- oder Magnetverbindung.

## Patentansprüche

1. Verfahren zum gerichteten Erzeugen von Wärme, **dadurch gekennzeichnet, dass** Holzkohle (21) in einer im wesentlichen abgeschlossenen Glutkammer (20), die mindestens eine feinmaschig siebartige Wandung (25) zum Abstrahlen der Wärme aufweist, glühend gehalten wird und **dadurch**, dass die feinmaschig siebartige Wandung (25) der Glutkammer (20) unterhalb eines Grillrosts (27) einer Grillvorrichtung angeordnet ist.

2. Verfahren nach dem vorhergehenden Anspruch, **gekennzeichnet durch** Holzkohle (21) mit einem Stückdurchmesser im wesentlichen unter 25 mm.

3. Verfahren nach einem der vorhergehenden Ansprüche, **dadurch gekennzeichnet, dass** die Hitze der Glut durch Zuführen einer Luftströmung (33) in die Glutkammer (20) verstärkt wird und durch Abstellen der Luftströmung (33) wieder vermindert wird.

4. Verfahren nach dem vorhergehenden Anspruch, **dadurch gekennzeichnet, dass** die Hitze der Glut durch Einstellen der Stärke der Luftströmung (33) in die Glutkammer (20) gesteuert wird.

5. Verfahren nach einem der vorhergehenden Ansprüche, **dadurch gekennzeichnet, dass** die Holzkohle (21) in der Glutkammer (20) **dadurch** entfacht wird, dass ein Zündmittel gezündet wird, dessen Hitze mittels einer Luftströmung (33) zur Holzkohle (21) in die Glutkammer (20) geleitet wird.

6. Verfahren nach dem vorhergehenden Anspruch, **dadurch gekennzeichnet, dass** das Zündmittel nahe bei der Holzkohle (21) gezündet wird.

7. Verfahren nach einem der beiden vorhergehenden Ansprüche, **dadurch gekennzeichnet, dass** das Zündmittel in einer Zündkammer (17) außerhalb der Glutkammer (20) gezündet wird.

8. Verfahren nach einem der drei vorhergehenden Ansprüche, **dadurch gekennzeichnet, dass** das Zündmittel ein pyrotechnisches Zündmittel oder geraspeltes Parafin ist.

9. Wärmequelle mit einer Holzkohleschale (16) **gekennzeichnet durch** eine im wesentlichen oberseitige Abdeckung mit feinmaschigem Sieb (25), **durch** eine Luftversorgungsleitung und **durch** mindestens eine Belüftungsöffnung (19), in die in einem unteren Bereich der Holzkohleschale (16) die Luftversorgungsleitung (3) mündet, an die ein Luftstromerzeuger (32), insbesondere ein Gebläse, anschließbar ist.

10. Wärmequelle nach dem vorhergehenden Anspruch, **dadurch gekennzeichnet, dass** das Gebläse (32) mit der Wärmequelle integriert eine Vorrichtung bildet.

11. Wärmequelle nach einem der vorhergehenden Ansprüche, **gekennzeichnet durch** eine Zündkammer (17) für ein Zündmittel, die nahe bei der Holzkohleschale (16) angeordnet durch mindestens eine Zündöffnung in einen unteren Bereich der Holzkohleschale (16) mündet.

12. Wärmequelle nach dem vorhergehenden Anspruch, **dadurch gekennzeichnet, dass** die Luftversorgungsleitung (3) durch die Zündkammer (17) verläuft und dass die Belüftungsöffnungen (19) auch als Zündöffnungen dienen.

13. Wärmequelle nach einem der beiden vorhergehenden Ansprüche, **dadurch gekennzeichnet, dass** die Zündkammer (17) so ausgebildet ist, dass sich eine entzündete Wunderkerze als Zündmittel in sie einführen lässt.

14. Wärmequelle nach Anspruch 11 oder 12, **dadurch gekennzeichnet, dass** die Zündkammer (17) eine Pfanne (44) für das Zündmittel aufweist, die von der Luftströmung (33) aus der Luftversorgungsleitung (3) nicht direkt durchströmt, sondern durchwirbelt wird.

15. Wärmequelle nach einem der vorhergehenden Ansprüche, **dadurch gekennzeichnet, dass** die Holzkohleschale (16) mit Sieb (25) und Holzkohleportion (21) gegebenenfalls einschließlich unterseitig angebrachter Lufteinlässe (19) und/oder die Zündkammer (17) mit Zündmittel als vorgefertigtes Wechselmodul ausgebildet sind.

16. Wärmequelle nach dem vorhergehenden Anspruch, **dadurch gekennzeichnet, dass** die Holzkohleschale (16) mit Sieb (25) und Holzkohleportion (21) gegebenenfalls einschließlich unterseitig angebrachter Lufteinlässe (19) und/oder die Zündkammer (17) mit Zündmittel als vorgefertigter Einmalartikel ausgebildet sind.

17. Wärmequelle nach einem der beiden vorhergehenden Ansprüche, **dadurch gekennzeichnet, dass** das Wechselmodul mittels Magnetkraft oder formschlüssigem Schnellverschluss (6) bcfestigbar ist.

18. Wärmequelle nach einem der vorhergehenden Ansprüche, **gekennzeichnet durch** einen wärmeisolierenden Bereich, insbesondere einen Behälter für Wasser (36) um die Holzkohleschale (16) und insbesondere unter der Holzkohleschale (16).

19. Wärmequelle nach dem vorhergehenden Anspruch, **dadurch gekennzeichnet, dass** die Luftleitung (3) insbesondere unterseitig um die Holzkohleschale (16) und insbesondere unter der Holzkohleschale (16) zu einer Luftkammer erweitert ist.

20. Wärmequelle nach einem der vorhergehenden Ansprüche mit einer Isolieraußenschale (9), die mindestens die Holzkohleschale (16) mindestens bereichsweise um einen Luftraum (37) beabstandet umschließt und von der Luftversorgungsleitung (3) durchdrungen ist, an die der Luftstromerzeuger (32) außerhalb der Isolieraußenschale (9) anschließbar ist oder in die der Luftstromerzeuger (32) integriert ist.

21. Grillvorrichtung mit einer Wärmequelle nach den beiden vorhergehenden Ansprüchen, mit einem Grillrost (27), der die Isolieraußenschale (9) oberseitig abdeckt.

22. Grillvorrichtung mit einer Wärmequelle nach dem vorhergehenden Anspruch, **dadurch gekennzeichnet, dass** der Grillrost (27) an der Isolieraußenschale (9) lösbar befestigt ist.

## Claims

1. Method for the controlled generation of heat, **characterized in that** charcoal (21) is kept in a glowing state in a substantially closed-off glow chamber (20) which has at least one fine-mesh screen-like wall (25) for radiating the heat, and **in that** the fine-mesh screen-like wall (25) of the glow chamber (20) is arranged beneath a grill grate (27) of a grilling device.

2. Method according to the preceding claim, **characterized by** charcoal (21) having a piece diameter of substantially below 25 mm.

3. Method according to either of the preceding claims, **characterized in that** the heat of the glowing embers is increased by supplying an air flow (33) into the glow chamber (20) and is reduced again by stopping the air flow (33).

4. Method according to the preceding claim, **characterized in that** the heat of the fire is controlled by setting the intensity of the air flow (33) into the glow chamber (20).

5. Method according to one of the preceding claims, **characterized in that** the charcoal (21) in the glow chamber (20) is kindled by the ignition of an ignition means, the heat of which is conveyed into the glow chamber (20) by means of an air flow (33) to the charcoal (21).

6. Method according to the preceding claim, **characterized in that** the ignition means is ignited close to the charcoal (21).

7. Method according to either of the two preceding claims, **characterized in that** the ignition means is ignited in an ignition chamber (17) outside the glow chamber (20).

8. Method according to one of the three preceding claims, **characterized in that** the ignition means is a pyrotechnic ignition means or grated paraffin.

9. Heat source having a charcoal bowl (16), **characterized by** a substantially top-side cover having a fine-mesh screen (25), by an air supply line (3) and by at least one ventilation opening (19) into which the air supply line (3), to which an air flow generator (32), in particular a fan, can be connected, opens in a lower region of the charcoal bowl (16).

10. Heat source according to the preceding claim, **characterized in that** the fan (32), integrated with the heat source, forms one device.

11. Heat source according to one of the preceding claims, **characterized by** an ignition chamber (17), for an ignition means, which is arranged close to the charcoal bowl (16) and opens through at least one ignition opening into a lower region of the charcoal bowl (16).

12. Heat source according to the preceding claim, **characterized in that** the air supply line (3) runs through the ignition chamber (17) and **in that** the ventilation openings (19) also serve as ignition openings.

13. Heat source according to either of the two preceding claims, **characterized in that** the ignition chamber (17) is designed such that an ignited sparkler can be introduced into it as ignition means.

14. Heat source according to Claim 11 or 12, **characterized in that** the ignition chamber (17) has, for the ignition means, a pan (44) through which the air flow (33) from the air supply line (3) swirls, rather than flowing directly.

15. Heat source according to one of the preceding claims, **characterized in that** the charcoal bowl (16) having a screen (25) and charcoal portion (21, possibly including air inlets (19) on the underside, and/or the ignition chamber (17) with ignition means are designed as a prefabricated exchangeable module.

16. Heat source according to the preceding claim, **characterized in that** the charcoal bowl (16) having a screen (25) and charcoal portion (21), possibly including air inlets (19) on the underside, and/or the ignition chamber (17) with ignition means are designed as a prefabricated disposable article.

17. Heat source according to either of the preceding two claims, **characterized in that** the exchangeable module can be fastened by means of magnetic force or a positively locking quick-release fastener (6).

18. Heat source according to one of the preceding claims, **characterized by** a thermally insulating region, in particular a water container (36) around the charcoal bowl (16) and in particular under the charcoal bowl (16).

19. Heat source according to the preceding claim, **characterized in that** the air line (3) is widened, in particular around the charcoal bowl (16) on the underside thereof and in particular under the charcoal bowl (16), to form an air chamber.

20. Heat source according to one of the preceding claims, having an insulating outer bowl (9) which surrounds at least the charcoal bowl (16), at least in certain regions, spaced apart therefrom by an air space (37), and is penetrated by the air supply line (3), to which the air flow generator (32) can be connected outside the insulating outer bowl (9) or into which the air flow generator (32) is integrated.

21. Grilling device having a heat source according to the two preceding claims, having a grill grate (27) which covers the top of the insulating outer bowl (9).

22. Grilling device having a heat source according to the preceding claim, **characterized in that** the grill grate (27) is detachably fastened to the insulating outer bowl (9).

## Revendications

1. Procédé pour produire de la chaleur de manière dirigée, **caractérisé en ce que** du charbon de bois (21) est maintenu incandescent dans une chambre d'incandescence (20) essentiellement fermée, qui présente au moins une paroi (25) de type tamis et à mailles fines pour la diffusion de la chaleur, et **en ce que** la paroi (25) de type tamis et à mailles fines de la chambre d'incandescence (20) est disposée au-dessous d'une grille de grill (27) d'un dispositif à griller.

2. Procédé selon la revendication précédente, **caractérisé par** du charbon de bois (21) présentant un diamètre unitaire principalement inférieur à 25 mm.

3. Procédé selon l'une quelconque des revendications précédentes, **caractérisé en ce que** la chaleur de l'incandescence est renforcée par l'arrivée d'un écoulement d'air (33) dans la chambre d'incandescence (20) et est réduite à nouveau par l'arrêt de l'écoulement d'air (33).

4. Procédé selon la revendication précédente, **caractérisé en ce que** la chaleur de l'incandescence est commandée par le réglage de l'intensité de l'écoulement d'air (33) dans la chambre d'incandescence (20).

5. Procédé selon l'une quelconque des revendications précédentes, **caractérisé en ce que** le charbon de bois (21) est embrasé dans la chambre d'incandescence (20) par le fait qu'un moyen d'inflammation est allumé, dont la chaleur est acheminée au moyen d'un écoulement d'air (33) au charbon de bois (21) dans la chambre d'incandescence (20).

6. Procédé selon la revendication précédente, **caractérisé en ce que** le moyen d'inflammation est allumé à proximité du charbon de bois (21).

7. Procédé selon l'une quelconque des deux revendications précédentes, **caractérisé en ce que** le moyen d'inflammation est allumé dans une chambre d'inflammation (17) en dehors de la chambre d'incandescence (20).

8. Procédé selon l'une quelconque des trois revendications précédentes, **caractérisé en ce que** le moyen d'inflammation est un moyen d'inflammation pyrotechnique ou de la paraffine râpée.

9. Source de chaleur comprenant une coque en charbon de bois (16), **caractérisée par** un revêtement essentiellement côté supérieur avec tamis (25) à mailles fines, par une conduite d'alimentation en air (3) et par au moins une ouverture d'aération (19), dans laquelle la conduite d'alimentation en air (3) débouche dans une zone inférieure de la coque en charbon de bois (16), conduite à laquelle un générateur de flux d'air (32), en particulier une soufflerie, peut être raccordé.

10. Source de chaleur selon la revendication précédente, **caractérisée en ce que** la soufflerie (32) avec la source de chaleur forme un dispositif de façon intégrée.

11. Source de chaleur selon l'une quelconque des revendications précédentes, **caractérisée par** une chambre d'inflammation (17) pour un moyen d'inflammation, qui, disposée à proximité de la coque en charbon de bois (16), débouche par au moins une ouverture d'inflammation dans une zone inférieure de la coque en charbon de bois (16).

12. Source de chaleur selon la revendication précédente, **caractérisée en ce que** la conduite d'alimentation en air (3) passe à travers la chambre d'inflammation (17) et **en ce que** les ouvertures d'aération (19) servent aussi d'ouvertures d'inflammation.

13. Source de chaleur selon l'une quelconque des revendications précédentes, **caractérisée en ce que** la chambre d'inflammation (17) est conçue de telle sorte qu'un cierge magique enflammé peut être introduit comme moyen d'inflammation dans la chambre.

14. Source de chaleur selon la revendication 11 ou 12, **caractérisée en ce que** la chambre d'inflammation (17) présente une poche (44) pour le moyen d'inflammation qui n'est pas traversée directement par l'écoulement d'air (33) provenant de la conduite d'alimentation en air (3), mais est mise en turbulence.

15. Source de chaleur selon l'une quelconque des revendications précédentes, **caractérisée en ce que** la coque en charbon de bois (16) avec tamis (25) et portion de charbon de bois (21), éventuellement avec des entrées d'air (19) placées sur le côté inférieur, et/ou la chambre d'inflammation (17) avec moyen d'inflammation sont conçues comme module amovible préfabriqué.

16. Source de chaleur selon la revendication précédente, **caractérisée en ce que** la coque en charbon de bois (16) avec tamis (25) et portion de charbon de bois (21), éventuellement avec des entrées d'air (19) placées sur le côté inférieur, et/ou la chambre d'inflammation (17) avec moyen d'inflammation sont conçues comme article à usage unique préfabriqué.

17. Source de chaleur selon l'une quelconque des deux revendications précédentes, **caractérisée en ce que** le module amovible peut être fixé au moyen d'une force d'aimant ou d'une fermeture rapide (6) par complémentarité de formes.

18. Source de chaleur selon l'une quelconque des revendications précédentes, **caractérisée par** une zone thermo-isolante, en particulier un récipient pour de l'eau (36) autour de la coque en charbon de bois (16) et en particulier au-dessous de la coque en charbon de bois (16).

19. Source de chaleur selon la revendication précédente, **caractérisée en ce que** la conduite d'air (3) est élargie, en particulier côté inférieur, autour de la coque en charbon de bois (16) et en particulier sous la coque en charbon de bois (16), en une chambre d'air.

20. Source de chaleur selon l'une quelconque des revendications précédentes avec une coque extérieure isolante (9), qui enveloppe à distance au moins la coque en charbon de bois (16) au moins par zones autour d'un espace d'air (37) et est traversée par la conduite d'alimentation en air (3), à laquelle le générateur de flux d'air (32) peut être raccordé en dehors de la coque extérieure isolante (9) ou dans laquelle le générateur de flux d'air (32) est intégré.

21. Dispositif à griller comprenant une source de chaleur selon les deux revendications précédentes, comprenant une grille de grill (27), qui recouvre côté supérieur la coque extérieure isolante (9).

22. Dispositif à griller comprenant une source de chaleur selon la revendication précédente, **caractérisé en ce que** la grille de grill (27) est fixée de façon amovible sur la coque extérieure isolante (9).
